# EUROPÄISCHE PATENTSCHRIFT

(11) **EP 2 220 557 B1**
(45) Veröffentlichungstag und Bekanntmachung des Hinweises auf die Patenterteilung: **01.10.2014**
(21) Anmeldenummer: 08860258.6
(22) Anmeldetag: 16.10.2008
(51) Int. Cl.: G06F 9/44, H04M 1/725

(54) **IMPLEMENTIERUNG DES USER INTERFACES VON MOBILTELEFONEN AUF BASIS VON BROWSER TECHNOLOGIE**
IMPLEMENTATION OF THE USER INTERFACE OF MOBILE TELEPHONES BASED ON BROWSER TECHNOLOGY
IMPLÉMENTATION DE L'INTERFACE UTILISATEUR DE TÉLÉPHONES MOBILES SUR LA BASE DE LA TECHNOLOGIE DE NAVIGATEUR

(30) Priorität: 11.12.2007 DE 102007059972
(43) Veröffentlichungstag der Anmeldung: 25.08.2010
(73) Patentinhaber: Deutsche Telekom AG, 53113 Bonn (DE)
(72) Erfinder: WELZEL, Thomas, 53604 Bad Honnef (DE)
(74) Vertreter: Cohausz Hannig Borkowski Wißgott
(86) Internationale Anmeldenummer: PCT/EP2008/008758
(87) Internationale Veröffentlichungsnummer: WO 2009/074188

(56) Entgegenhaltungen:
- EP-A- 1 331 559
- EP-A- 1 798 943
- WO-A-03/041373
- US-A1- 2004 093 376
- US-A1- 2004 220 943
- US-A1- 2007 155 425
- US-A1- 2007 260 749

## Beschreibung

Die vorliegende Erfindung betrifft ein Mobilfunkendgerät mit einer Benutzerschnittstelle zur Bedienung des Mobilfunkendgerätes und/oder Verwendung von über ein Mobilfunknetz abrufbaren Diensten, mit einer Menüstruktur und einer grafischen Benutzungsoberfläche zur Visualisierung der Menüstruktur, wobei das Mobilfunkendgerät mittels eines Betriebssystems betrieben wird.

Mobilfunkendgeräte wie beispielsweise Mobiltelefone für heutige GSM und UMTS Mobilfunknetze (GSM, Global System for Mobile Communication, UMTS, Universal Mobile Telecommunication System) werden von Herstellern produziert, die nicht zugleich auch Anbieter von Mobilfunkdiensten respektive Mobilfunknetzbetreiber sind. Die Hersteller statten ihre Mobiltelefone unmittelbar mit dem für die Bedienung der Mobiltelefone und Inanspruchnahme von Netzdiensten notwendigen Betriebssystem und der benötigten Standardsoftware aus, die den größten Teil der von den Netzbetreibern und Netzanbietern angebotenen Diensten adäquat bedienen kann. Es ist jedoch in zunehmenden Maße ein Anliegen der Netzanbieter und-betreiber, dass die Mobiltelefone mit Software ausgestattet sind, die an das spezielle Netzangebot des Netzanbieters und/ oder an das individuelle Erscheinungsbild des Netzanbieters beim Auftreten auf dem Markt, z.B. in Farbe- und Formgestaltung, aber auch in der Abbildung des netzbetreiberspezifischen Dienste, angepasst ist.

Die Netzanbieter, unter welchem im Folgenden auch Netzbetreiber verstanden werden, wünschen sich daher von den Mobiltelefonherstellern individualisierte Software, beispielsweise eine besondere Auswahl von Hintergrundbildern für das Display, d.h. die grafische Anzeige des Mobiltelefons, die für das Auftreten des Netzanbieters auf dem Markt typisch sind, wie beispielsweise besondere Klingeltöne, Sonderrufnummern, Einstellungen zu Netzdiensten wie Rufumleitung, Mailbox, Messagingdienste etc., aber auch Menüfunktionen, die auf netzbetreiberspezifische Dienste verweisen oder diese bereits abbilden, die bereits in dem Mobiltelefon eingerichtet und voreingestellt sind. Die Individualisierungen betreffen dabei hauptsächlich die menübasierte Benutzerführung in dem Mobilfunkendgerät wie einem Mobiltelefon, d.h. die Benutzerschnittstelle zwischen Mobilfunkendgerät und dessen Benutzer, die sowohl hinsichtlich ihrer grafischen Benutzungsoberfläche als auch hinsichtlich des Umfangs, der Art und des Inhalts der auswählbaren Menüs in Bezug auf die vom Netzanbieter zur Verfügung gestellten Dienstleistungen angepasst werden muss.

Die bekannten Endgeräte beispielsweise für GSM und UMTS Mobilfunknetze besitzen eine menübasierte Benutzerführung, die in der Regel ein fester Bestandteil des Betriebssystems (RTOS, run-time operation system) ist. Sie kann nur vom Endgerätehersteller unter Eingriff in die Software des Endgerätes verändert werden. Dadurch ergeben sich erhebliche Einschränkungen bei der Individualisierung von Endgeräten für den einzelnen Netzanbieter. Eine Änderung der Software ist nur mit unvertretbar hohem Implementierungsaufwand möglich, daher äußerst unflexibel und zugleich kostenaufwendig. Ferner ist sie ein unvertretbarer Zeitaufwand hinsichtlich des aus den time-to-market Vorgaben der Netzanbieter resultierenden Zeitdrucks.

Neben der betriebssystemintegrierten Lösung gibt es bei Mobilfunkendgeräten sogenannte offene Betriebssysteme wie beispielsweise das Betriebssystem Symbian OS, ein proprietäres Betriebssystem für Smartphones und PDAs (Personal digital assistant). Bei diesen offenen Betriebssystemen ist das Benutzerinterface, d.h. die Benutzerschnittstelle, vom Endgerätehersteller auf das Betriebssystem aufgesetzt. Es handelt sich jedoch auch bei dieser Lösung um ein starres System, welches nur geringfügig an den Bedarf und die Wünsche der Netzanbieter angepasst werden kann.

Die europäische Patentanmeldung EP 1 798 943 A beschreibt eine Integration einer "Messaging-Applikation" auf einer SIM-Karte und die Einflussnahme von außen auf die Nachrichten, die über die Messaging-Applikation ausgetauscht werden. Dabei kann für die Messaging-Applikation eine grafische Benutzungsoberfläche auf der SIM-Karte implementiert sein und in einem Browser ausgeführt werden.

Aus der Schrift US 2007/155425 A1 ist ein Mobiltelefon mit einem Betriebssystem und einer graphischen Benutzungsoberfläche bekannt, die "offline" programmiert wird, d.h. unabhängig von dem Mobilfunkendgerät. Die graphische Benutzungsoberfläche werden einerseits und das Betriebssystem für das Mobiltelefon andererseits separat voneinander entwickelt, programmiert und getestet. An den Programmierschritt für die Benutzungsoberfläche schließt sich die Erstellung eines "Content-File" an, das die Benutzungsoberfläche enthält und auf das Mobilfunkendgerät geladen wird. Anschließend wird verifiziert, ob der Inhalt des "Content-Files" korrekt ist, d.h. ob das "Content-File" korrekt empfangen worden ist. Alle Komponenten des Mobilfunkendgeräts in US 2007/155425 A1 sind miteinander fest verbunden, wobei die einzelnen Funktionsblöcke durch einen Bus in Verbindung stehen. Um die Teilnehmer an einem Bus anzusprechen, müssen die Bus-Teilnehmer eine eindeutige Bus-Adresse aufweisen, die diesen bei der Herstellung der Computerarchitektur zugewiesen wird, so dass keine externe Speichereinheit in Gestalt einer SIM-Karte für das Content-File verwendet werden kann. Die US 2007/155425 A1 beschreibt weiter, dass erst dann, wenn das Betriebssystem (durch externe Programmierung) fertiggestellt ist, die Produktion des Mobiltelefons erfolgt. Nach der Herstellung des Mobiltelefons werden sowohl das Betriebssystem als auch der die Benutzungsoberfläche bildende Content gemeinsam im Mobiltelefon integriert, so dass die für die graphische Benutzungsoberfläche benötigten Daten (im Content-File) direkt und mitsamt des Betriebssystems auf einem Mobilfunkendgerät hinterlegt werden. Schließlich ist anzumerken, dass bei der US 2007/155425 A1 die Darstellung der grafischen Benutzeroberfläche eines Betriebssystems in einem Media-Player erfolgen soll

Die US 2004/220943 A1 beschreibt ein Verfahren, bei dem ein Benutzer eines Mobiltelefons die graphische Benutzungsoberfläche an seine Wünsche anpassen kann. Dies erfolgt dadurch, dass der Mobilfunkbenutzer an seinem Computer, der ein gewöhnlicher Desktop-Computer sein kann, verschiedene Einstellungen der Benutzungsoberfläche für sich individualisiert und anschließend aus den veränderten Einstellungen eine Themendatei (Theme-File) generiert, welche dann von dem Benutzer manuell von dem Computer über ein Kabel oder über eine Mobilfunkverbindung an das Mobiltelefon übertragen wird.

Die WO 03/041373 A beschreibt ein Verfahren zur Vereinheitlichung der Bediensteuerung bei Mobilfunkendgeräten. Es wird im Mobilfunkendgerät ein Mensch-Maschine-Interface (MMI)-Client installiert, der über die Luftschnittstelle mit einem MMI-Server eines Mobilfunknetzes kommuniziert, wobei im MMI-Client verschiedene Bedienprozeduren zur Ausführung von Funktionen des Mobilfunkendgerätes menügesteuert abgelegt sind, und die Ausführung der ausgewählten Funktionen entweder endgerätebasiert anhand von im Mobilfunkendgerät abgelegten funktionalen Prozeduren und/oder netzbasiert anhand von im MMI-Server abgelegten funktionalen Prozeduren erfolgt. Durch dieses Verfahren wird erreicht, dass ein Teilnehmer eines Mobilfunknetzes beim Wechsel zu einem anderen Mobilfunkendgerät keine neuen Bedienprozeduren lernen muss. Die generischen Prozeduren können maßgeschneidert auf das Angebot des jeweiligen Mobilfunknetzbetreibers angepasst werden.

Aus der US 2004/093376 A1 ist eine Mensch-Maschine-Schnittstelle für drahtlose Kommunikationseinrichtungen bekannt, die aus Textauszeichnungs- bzw. Markup-Sprachen konstruiert sind. Es wird eine drahtlose Kommunikationseinrichtung mit einer entsprechenden MMI bereitgestellt. Dabei wird der Inhalt einer Seite oder eines Bildschirmdisplays durch den Einschluss vordefinierter Symbole in den Inhalt selbst definiert, die die logischen Komponenten des Inhalts, Anweisungen für das Layout des Inhalts auf der Seite oder dem Bildschirm oder andere Daten bezeichnen, die von einem automatischen System interpretierbar sind, das für die Anzeige, die Manipulation oder die Modifizierung des Inhalts verantwortlich ist.

Der EP 1 331 559 A entnimmt man ein Verfahren zur Personalisierung von Applikationen in einer mobilen SIM oder USIM Terminalkarte. Bei diesem Verfahren wird eine grafische Benutzeroberfläche (Graphic User Interface) verwendet, die auf einer Webseite mit einem zentralen Server zur Interaktion basiert. Über die grafische Benutzeroberfläche kann ein Benutzer seine Applikation gemäß seiner Wünsche konfigurieren. Die so erzeugte Applikation wird dann an einen Interpreter gesendet, der diese in eine Pseudocodesprache umwandelt, welche wiederum zu einem Applikationsgenerator gesendet wird, der die in dieser Pseudocodesprache vorliegende Applikation in eine Hochsprache umwandelt. Der Applikationsgenerator stellt die Applikation ferner in einem herunterladbaren Code einem Applikations-Downloadmodul zur Verfügung, das die Applikation zu einer SIM oder USIM-Karte auf einem mobilen Endgerät herunterlädt. Auf der SIM-Karte oder USIM-Karte wird die Applikation anschließend in ihrer vom Benutzer angepassten Form gespeichert.

Die US 2007/ 260749 A1 offenbart ein Verfahren und ein elektronisches Gerät, das zur Ausführung von Programmen eingerichtet ist, wobei das Gerät ein Betriebssystem aufweist, das eine Trennung von Daten einer Benutzerschnittstelle und dem Rest der Daten des Datenverarbeitungssystems ermöglicht. Wird auf dem Gerät eine Applikation gestartet, wird die Größe des Displays des Endgerätes erfasst und eine Benutzerschnittstellendatei von einem Netzwerkserver geladen, der die Applikation in einer an das Display des Endgerätes entsprechend angepassten Bildschirmgröße enthält.

Der Erfindung liegt die Aufgabe zugrunde, ein Mobilfunkendgerät derart auszugestalten, dass eine Benutzerschnittstelle zur Verfügung gestellt wird, die eine einfache und effiziente Anpassung an die netzanbieterspezifischen Wünsche und angebotenen Netzdienste universal und bedarfsgerecht ermöglicht, wobei eine größtmögliche Flexibilität bei der Individualisierung, insbesondere hinsichtlich nachträglich vorzunehmender Änderungen und/oder Ergänzungen der Benutzerschnittstelle, beispielsweise in Folge einer Erweiterung der Netzdienste, erreicht werden soll. Es ist ferner Aufgabe der Erfindung, die zur Realisierung der Benutzerschnittstelle notwendigen Mittel zur Anwendung der Benutzerschnittstelle zur Verfügung zu stellen.

Diese Aufgabe wird erfindungsgemäß durch ein Mobilfunkendgerät gemäß Anspruch 1 gelöst. Vorteilhafte Ausgestaltungen der Erfindung sind in den Unteransprüchen gegeben.

Erfindungsgemäß ist bei dem Mobilfunkendgerät eine Benutzerschnittstelle zur Bedienung des Mobilfunkendgerätes und/oder Verwendung von über ein Mobilfunknetz abrufbaren Diensten vorgesehen, mit einer Menüstruktur und einer grafischen Benutzungsoberfläche zur Visualisierung der Menüstruktur, wobei das Mobilfunkendgerät mittels eines Betriebssystems betrieben wird, die Benutzerschnittstelle unabhängig von dem Betriebssystem des Mobilfunkendgerätes implementierbar ist, insbesondere netzanbieterspezifisch implementierbar ist, und die für die Benutzerschnittstelle benötigten Daten von einer vom Mobilfunkendgerät unabhängigen Speichereinheit lieferbar sind.

Dadurch kann die Benutzerschnittstelle unabhängig vom Betriebssystem implementiert und damit unabhängig vom Gerät selbst ausgestaltet sein. Unter den für die Benutzerschnittstelle benötigten Daten sind jene Daten zu verstehen, die für den Aufbau der Menüstruktur sowie die Darstellung der Menüstruktur und der grafischen Benutzungsoberfläche zur Visualisierung der Menüstruktur benötigt werden.

Es wird ein Mobilfunkendgerät mit einer Benutzerschnittstelle vorgeschlagen, die es Netzanbietern ermöglicht, Endgeräte gemäß dem eigenen Markenauftritt und Dienste- Portfolio zu individualisieren; Inhalte, beispielsweise in Gestalt von Bildern, Tönen oder Videos, in einer einheitlichen Ausführungsumgebung anzuzeigen; Applikationen in der Ausführungsumgebung auszuführen; die Menüstruktur des Endgerätes in der Ausführungsumgebung anzuzeigen; mit der Teilnahme am Mobilfunk dem Teilnehmer eigene Inhalte, beispielsweise Bilder, Töne, Videos, Programme und/oder Programmteile, dem Mobilfunkteilnehmer über das Identifikationsmodul des Endgerätes automatisiert und selektiv zur Verfügung zu stellen; die Benutzerschnittstelle flexibel und einfach über eine Datenverbindung zwischen Endgerät und einem Computer des entsprechenden Netzanbieters oder eines anderen Dienstanbieters zu verändern, zu löschen oder vollständig neu zu laden, beispielsweise zu Zwecken der Aktualisierung (Update).

Zur Realisierung einer derartigen Benutzerschnittstelle zwischen einem Mobilfunkendgerät und dem das Endgerät benutzenden Anwender zur Bedienung des Endgerätes und/ oder Verwendung von vom Anbieter des Telekommunikationsnetzes oder eines Dritten zur Verfügung gestellten Diensten, mit einer Menüstruktur und einer grafischen Benutzungsoberfläche zur Visualisierung der Menüstruktur, wird vorgeschlagen, die Benutzerschnittstelle von dem Betriebssystem des Endgerätes unabhängig zu implementieren, so dass sie vom Netzanbieter nach seinem Markenauftritt und/oder Dienstportfolio individualisiert werden kann, und diese - je nach Anwendungsfall - auf einer vom Endgerät unabhängigen Speichereinheit zu speichern. Auf diese Weise kann eine größtmögliche Flexibilität für die Netzanbieter erreicht werden, die die Menüstruktur, Menüinhalte und grafische Gestaltung der Benutzungsoberfläche selbst implementieren und nachträglich auf einfache und kostengünstige Weise ändern und/ oder Erweitern können.

Die Benutzerschnittstelle ist in der Art einer grafischen Benutzungsoberfläche mit netzanbieterspezifisch grafisch gestalteter Menüführung ausgeführt, die dem Anwender Zugriff auf die gesamte Endgerätefunktionalität, sämtliche vom Netzanbieter angebotenen Dienste, sowie weitere Daten und Applikationen ermöglicht. Als Speichereinheit für die softwarebasierte Benutzerschnittstelle kann das Identifikationsmodul des Endgerätes verwendet werden, auf der die Benutzerschnittstelle generisch implementiert sein kann. Bei dem Identifikationsmodul kann es sich beispielsweise um die SIM-Karte (Subscriber Identity Module) oder USIM-Karte (Universal Subscriber Identity Module) eines Mobiltelefons handeln.

In einer alternativen Ausgestaltung der Erfindung kann die Einheit ein Computer, insbesondere ein Server des Netzanbieters oder eines Dritten sein, auf dem die Benutzungsschnittstelle implementiert ist. In diesem Fall ist auf dem Identifikationsmodul eine Verknüpfung (Link) zum Aufbau einer Datenverbindung zu dem Server hinterlegt. Der Link kann beispielsweise ein Uniform Resource Locator (URL), d.h. eine Serveradresse im World Wide Web sein, über die bzw. den der Server des Netzanbieter oder des Dritten über eine Internetverbindung, d.h. eine online Datenverbindung erreichbar ist.

In diesem Fall ist die Benutzerschnittstelle derart ausgestaltet, dass zunächst mit Hilfe des auf dem Identifikationsmodul hinterlegten Links eine Verbindung mit einem Server des Netzanbieters oder eines Dritten hergestellt wird und anschließend die Menüstruktur der Benutzerschnittstelle auf das Endgerät oder das Identifikationsmodul geladen wird. Dies hat den Vorteil, dass der Netzanbieter oder der Dritte auf dem Server stets eine aktuelle Fassung der Benutzerschnittstelle bereithalten und dem Teilnehmer zur Verfügung stellen kann. Vorzugsweise kann die Benutzerschnittstelle eine Menüfunktion aufweisen, mit der ein solcher Download der Menüstruktur zu einem späteren Zeitpunkt möglich ist. Auf diese Weise kann einfach und schnell ein Update der Benutzerschnittstelle erfolgen.

Erfindungsgemäß ist die grafische Benutzungsoberfläche der Benutzerschnittstelle in einer einheitlichen Ausführungsumgebung auf dem Display des Endgerätes anzeigbar und bedienbar. Menüs mit Funktionen des Endgerätes oder Dienste des Netzanbieters oder eines Dritten können dabei über die Ausführungsumgebung auf einfache Weise ausgewählt werden.

Die Ausführungsumgebung ist ein Webbrowser, der für den Einsatz in einem Mobilfunkendgerät optimiert ist. Dieser ist heutzutage aufgrund der Internetfähigkeit gängiger Mobiltelefone bereits überwiegend bei Mobilfunkendgeräten verfügbar und ermöglicht die Darstellung vieler unterschiedlicher Datenformate. Neue Datenformate können durch die Verwendung von Plug-Ins im Browser ebenfalls dargestellt werden. Zur Darstellung der menübasierten Benutzerführung kann zumindest ein Teil des Identifikationsmoduls als http-Server eingerichtet sein, der die zur Darstellung der Benutzungsoberfläche der Benutzerschnittstelle im Browser erforderlichen Daten liefert. Die Benutzerschnittstelle kann in diesem Fall in einer Markup-Sprache, insbesondere in WML (Wireless Markup Language) programmiert sein, welches Teil des Wireless Application Protocoll (WAP) ist und zur Darstellung von internetbezogenen Inhalten im Browser eines Mobilfunkendgerätes dient. Alternativ kann die Schnittstelle beispielsweise auch in HTML (Hypertext Markup Language), XHTML (Extensible Hypertext Markup Language) oder XML (Extensible Markup Language) programmiert sein.

Weiterhin können der Benutzerschnittstelle auf der Speichereinheit und/ oder im Endgerät gespeicherte netzanbieterspezifische Daten und/oder Applikationen zugeordnet sein, die über die Menüstruktur auswählbar und in dem Browser anzeigbar und/oder ausführbar sind. Hierbei kann es sich beispielsweise um netzanbieterspezifische Bilder, z.B. für die Displayhintergrundgestaltung, Klingeltöne und Musik, Webseiten, Videos, netzanbieterspezifische oder sonstige Sonderrufnummern, z.B. zur Mailbox oder zu Auskunftsdiensten, sowie Einstellungsparameter für Netzdienste wie Rufumleitung, Mailboxfunktionen, Messagingdienste oder ein netzgestütztes Adressbuch handeln.

Ferner kann es sich bei den Applikationen beispielsweise um Spiele oder Hilfsprogramme wie Rechner, Adressbuch, Texterstellung, oder Kalender handeln, die im Browser anzeigbar und ausführbar sind. Hierzu kann der Browser zur Erweiterung seiner Funktionalität beispielsweise um ein Java Plug-In ergänzt werden, so dass in Java programmierte Applikationen in dem Browser ausführbar sind. Die Daten und/oder Applikationen können bereits seitens des Netzanbieters auf das Informationsmodul geladen sein. Alternativ oder in Kombination können sie oder weitere Daten und/oder Applikationen auch während des Gebrauchs des Endgerätes weitere Daten und/oder Applikationen auch während des Gebrauchs des Endgerätes über eine Internet-Datenverbindung, beispielsweise über eine GPRS- Verbindung (Global Packet Radio Service), von einem Server auf das mobile Endgerät heruntergeladen und in diesem und/ oder auf dem Identifizierungsmodul gespeichert werden, wo sie zusammen mit den bereits gespeicherten Daten und/ oder Applikationen dem Anwender zur Verfügung stehen. Auch können die Daten und/ oder Applikationen alternativ oder in Kombination auf dem Server verbleiben und über eine online Datenverbindung zu dem Server verwendet werden.

In einer besonderen Ausführungsvariante der Erfindung können sich Teile der Menüstruktur der Benutzerschnittstelle, insbesondere einzelne Untermenüs, auf dem Endgerät oder auf einem Computer des Netzanbieters oder eines Dritten befinden. Auf diese Weise ist es möglich, spezielle aus der Menüstruktur heraus auswählbare Funktionen, beispielsweise Funktionen, die Funktionalitäten des Endgerätes betreffen, wie Bluetooth, Infrarotschnittstellen, Speicherkartenverwaltung, Kamera oder dergleichen, oder Einstellungen, die Betriebsparameter des Endgerätes betreffen, wie z.B. Displayhelligkeit, Displayanzeigedauer, Benutzerprofile, Tastenbelegung etc., auf dem Endgerät zu belassen, so dass die oberen Menüebenen individuell von den Netzanbietern gestaltet und auf dem Identifikationsmodul hinterlegt werden und einzelne endgerätespezifische Untermenüs von den Endgeräteherstellern gestaltet und in einem Speicher im Endgerät hinterlegt werden, wobei die Benutzerschnittstelle durch die einzelnen Untermenüs, die Bestandteil des RTOS des Endgerätes sein können, ergänzt wird.

Weiterhin können ergänzend auch einzelne Untermenüs auf einem Server des Netzanbieters oder eines Dritten hinterlegt sein, um ggfs. Speicherplatz auf dem Identifikationsmodul zu sparen. Dabei können beispielsweise selten verwendete Applikationen, beispielsweise einzelne Spiele von dem Identifikationsmodul ausgelagert werden. Die Untermenüs können beispielsweise durch einen Link des übergeordneten Menüs erreicht werden, das über eine online Datenverbindung mit dem Server verbindet.

Erfindungsgemäß kann ein Informationsmodul eines Mobilfunkendgerätes vorgesehen sein, das eine Benutzerschnittstelle mit der vorgenannten Funktionalität aufweist. Das Identifikationsmodul stellt dabei vorzugsweise die SIM- oder USIM-Karte eines Mobiltelefons dar, auf der die Benutzerschnittstelle implementiert ist. Dabei kann zumindest ein Teilbereich des Identifikationsmoduls als http-Server ausgestaltet sein, der die zur Darstellung der Benutzungsoberfläche der Benutzerschnittstelle in einem Browser erforderlichen Daten liefert, wobei die Benutzerschnittstelle in einer Markup-Sprache programmiert und in dem http-Server hinterlegt sein kann.

Weiterhin kann das Identifikationsmodul eine Speichereinheit aufweisen, die netzanbieterspezifische Inhalte und/oder Applikationen enthält, die über die Menüstruktur der Benutzerschnittstelle auswählbar und in einem Browser anzeigbar oder ausführbar sind. Hierbei kann es sich beispielsweise um netzanbieterspezifische Bilder, z.B. für die Displayhintergrundgestaltung, Klingeltöne und Musik, Webseiten, Videos, netzanbieterspezifische oder sonstige Sonderrufnummern, z.B. zur Mailbox oder zu Auskunftsdiensten, sowie Einstellungsparameter für Netzdienste wie Rufumleitung, Mailboxfunktionen, Messagingdienste oder ein netzgestütztes Adressbuch handeln, die für den Teilnehmer des speziellen Mobilfunknetzes voreingestellt sind. Ferner kann es sich bei den Applikationen beispielsweise um Spiele oder Hilfsprogramme wie Rechner, Adressbuch, Texterstellung, oder Kalender handeln, die im Browser ausführbar sind.

Die Bedienung der menübasierten grafischen Benutzungsoberfläche der Benutzerschnittstelle des mobilen Endgerätes für die Telekommunikation, d.h. für den Mobilfunk, erfolgt in der Weise, dass die Menüführung in einer vom Endgerät unabhängigen Ausführungsumgebung erfolgt, in der die Menüs der Benutzerschnittstelle darstellbar und auswählbar sind.

Die Ausführungsumgebung ist dabei vorzugsweise ein auf das mobile Endgerät optimierter Browser, der in einem full-screen Modus verwendbar ist, in welchem seine Fläche zum Anzeigen von Inhalten das Display des Endgerätes vollständig, d.h. zu 100% ausfüllt. Alternativ kann vorgesehen werden, dass der Browser dauerhaft lediglich einen geringeren Teil der Displayfläche, beispielsweise zwischen 80% und 95%, ausfüllt, so dass gleichzeitig mit den Browserinhalten eine Statusleiste mit Basisinformationen wie Batterieanzeige, Feldstärke und/ oder Nachrichtenanzeigen (Message Waiting Indicators, MWI) im Display des Endgerätes sichtbar bleibt und dem Nutzer zur Verfügung steht.

Vorzugsweise ist vorgesehen, dass nach dem Einschalten des Endgerätes in dem Browser eine netzanbieterspezifische Startseite angezeigt wird. Diese kann in einer ersten Ausführung vom Browser aus dem Identifikationsmodul des Endgerätes geladen werden. Weiterhin kann vorgesehen sein, dass auf dem Identifikationsmodul keine Startseite sondern ein Link, d.h. eine Verknüpfung zu einem Computer, insbesondere zu einem Server, des Netzanbieters oder eines Dritten hinterlegt ist, so dass nach dem Einschalten des Endgerätes in dem Browser eine netzanbieterspezifische Startseite angezeigt wird, die vom Browser von dem Computer des Netzanbieters über eine Internetverbindung, d.h. eine Online-Datenverbindung, geladen wird.

Diese kann auch dauerhaft in dem Identifizierungsmodul oder dem Endgerät gespeichert werden, so dass bei einem nächstmaligen Einschalten des Endgerätes diese Seite geladen und angezeigt wird. Weiterhin kann vorgesehen sein, dass nach dem Einschalten des Endgerätes im Browser eine Startseite des Endgeräteherstellers angezeigt wird, die von dem Browser aus dem Endgerät geladen wird, wenn in dem Identifikationsmodul weder eine Startseite noch ein Link zu einem Computer hinterlegt ist. Bei dieser Startseite kann es sich vorzugsweise um eine Standardseite des Endgeräteherstellers handeln.

Es wird nachstehend beispielhaft eine vorteilhafte Ausgestaltung der Erfindung beschrieben.

Ein Mobiltelefon als Mobilfunkendgerät mit der erfindungsgemäßen Benutzerschnittstelle startet nach dem Einschalten automatisch einen herkömmlichen, für Mobiltelefone optimierten Web-Browser im full-screen Modus oder in einem Ausschnitt der Anzeige, so dass eine Statuszeile im gleichen Display oder in einem zweiten Display zur Anzeige gebracht werden kann, um Basisinformationen wie Batterieanzeige, Feldstärkeanzeige und mögliche MWI dem Nutzer zur Verfügung zu stellen. Alternativ zu einem Mobiltelefon kann das Verfahren und die erfindungsgemäße Benutzerschnittstelle auch in einem schnurlosen Telefon für den häuslichen Einsatz, beispielsweise einem DECT-Telefon (Digital Enhanced Cordless Telecommunications) verwendet werden.

Der Browser öffnet eine voreingestellte (default-) Startseite einer HTML, WML, XML oder vergleichbaren Markup Programmiersprache mit der erfindungsgemäßen Benutzerschnittstelle. Diese Seite befindet sich im Speicher der SIM (Subscriber Identity Module) und wird vom Netzbetreiber zur Verfügung gestellt. Sie stellt eine menübasierte grafische Benutzerführung dar, wobei der Mobilfunkteilnehmer auf dieser Seite sowohl Telefonfunktionen als auch Netzbetreiberdienste sowie den Zugang zu weiteren Informationen auswählen kann, beispielsweise zu Inhalten wie Musik, Bilder, Sprache, Spiele oder Standard-Netzbetreiberdienste wie Rufumleitung und Anrufbeantworterfunktionen, Messagingdienste, netzgestütztes Adressbuch, etc. Es bedarf dabei grundsätzlich keiner separaten Menüfunktionen des Endgerätes. Es können jedoch beliebige Untermenüs ausgewählt werden, die sich entweder auf der SIM-Karte oder auf dem Endgerät befinden oder über eine online Datenverbindung auf einen Server verbinden.

Die auf der SIM-Karte enthaltenen Inhalte können durch Inhalte ergänzt oder ersetzt werden, die über eine mobile Datenverbindung vom Netzanbieter oder einem sonstigen Inhalteanbieter geladen werden. Die auf der SIM-Karte befindlichen Applikationen können sowohl im Browser selbst, beispielsweise mittels der Java-Technologie, oder auch im Betriebssystem des Endgerätes oder anderen Middelware-Layern ausgeführt werden.

Nachdem eine Applikation aufgerufen wurde, kann diese auf dem Display im Browser zur Anzeige gebracht werden. Nach dem Schließen der Applikation wird in dem Browser automatisch wieder die Seite mit dem Startmenü aufgerufen.

Sollte das Endgerät beim Starten weder eine entsprechende Menüstruktur im vorgeschlagenen Markup-Format auf der SIM-Karte vorfinden, noch einen Link zu einer Online-Menüstruktur auf dieser finden, wird ein vom Endgerätehersteller definiertes Standard-Menü angezeigt, so dass eine Benutzung des Mobiltelefons auch ohne eine netzanbieterspezifische Seite möglich ist.

Mit der vorliegenden Erfindung wird eine Benutzerschnittstelle für ein Mobilfunkendgerät vorgeschlagen, bei dem keine spezifische Implementierung auf dem Betriebssystem des Endgerätes vorgenommen werden muss, sondern lediglich eine generische Implementierung erfolgt, die in einem Browser angezeigt werden kann und daher nicht endgeräteabhängig ist.

Weiterhin ist die Benutzerschnittstelle des Endgerätes vom Netzanbieter oder Netzbetreiber gestaltet und wird vorzugsweise auf der SIM oder USIM des Endgerätes geliefert. Besonderer Vorteil der browserbasierten Darstellung der Benutzerführung ist die Möglichkeit, Telefonfunktionen und/ oder Netzdienste aus dem Browser heraus zu aktivieren, wobei die Benutzerschnittstelle dadurch, dass sie unabhängig vom Betriebssystem des Mobilfunkendgerätes implementiert ist, unabhängig vom Gerätehersteller gestaltet werden kann.

## Patentansprüche

1. Mobilfunkendgerät mit einer Benutzerschnittstelle zur Bedienung des Mobilfunkendgerätes und/oder zur Verwendung von über ein Mobilfunknetz abrufbaren Diensten, bei dem die Benutzerschnittstelle in der Art einer grafischen Benutzungsoberfläche ausgeführt ist, die eine netzanbieterspezifisch grafisch gestaltete Menüstruktur visualisiert, wobei das Mobilfunkendgerät mittels eines Betriebssystems betrieben wird und die Menüstruktur einem Anwender Zugriff auf die gesamte Endgerätefunktionalität, von einem Netzanbieter angebotenen Dienste, sowie weitere Daten und Applikationen ermöglicht, wobei die Benutzerschnittstelle unabhängig von dem Betriebssystem des Mobilfunkendgerätes implementierbar ist und Daten, die für die Benutzerschnittstelle zur Darstellung der grafischen Benutzungsoberfläche sowie zum Aufbau und zur Visualisierung der Menüstruktur in der grafischen Benutzungsoberfläche benötigt werden, von einer vom Mobilfunkendgerät unabhängigen Speichereinheit lieferbar sind, wobei die grafische Benutzungsoberfläche in einem Browser auf einer Anzeige des Endgerätes anzeigbar und bedienbar ist und Menüs mit Funktionen des Endgerätes und der Dienste eines Anbieters über den Browser auswählbar sind, wobei
- die Speichereinheit ein mit dem Mobilfunkendgerät verbindbares Identifikationsmodul ist, oder
- die Speichereinheit ein Computer ist, auf dem die Benutzungsschnittstelle implementiert ist und auf einem Identifikationsmodul eine Verknüpfung zum Aufbau einer Datenverbindung zu dem Computer hinterlegt ist und die für die Benutzerschnittstelle benötigten Daten von dem Computer auf das Identifikationsmodul oder in einen Speicher des Endgerätes herunterladbar ist.

2. Mobilfunkendgerät nach Anspruch 1, **dadurch gekennzeichnet, dass** zumindest ein Teil des Identifikationsmoduls des Mobilfunkendgerätes als http-Server eingerichtet ist, der die zur Darstellung der Benutzungsoberfläche der Benutzerschnittstelle erforderlichen Daten liefert.

3. Mobilfunkendgerät nach einem der vorherigen Ansprüche, **dadurch gekennzeichnet, dass** die Benutzerschnittstelle in HTML oder WML oder XML programmiert ist.

4. Mobilfunkendgerät nach einem der vorherigen Ansprüche, **dadurch gekennzeichnet, dass** der Benutzerschnittstelle auf der Speichereinheit und/oder in dem Mobilfunkendgerät gespeicherte netzanbieterspezifische Daten und/oder Applikationen zugeordnet sind, die über die Menüstruktur auswählbar und/oder anzeigbar und/oder ausführbar und/oder bedienbar sind.

5. Mobilfunkendgerät nach einem der vorherigen Ansprüche, **dadurch gekennzeichnet, dass** sich Teile der Menüstruktur der Benutzschnittstelle, insbesondere einzelne Untermenüs, und/oder Teile der Daten zum Aufbau der Menüstruktur auf dem Endgerät und/oder auf einem Computer des Netzanbieters oder eines Dritten befinden.

6. Mobilfunkendgerät nach einem der vorherigen Ansprüche, **dadurch gekennzeichnet, dass** die Benutzerschnittstelle mindestens eine Applikation aufweist, mittels derer eine Online-Datenverbindung mit einem Server herstellbar ist.

7. Mobilfunkendgerät nach einem der vorherigen Ansprüche, **dadurch gekennzeichnet, dass** das Identifikationsmodul eine SIM- Karte oder USIM-Karte ist.

## Claims

1. A mobile radio terminal having a user interface for controlling the mobile radio terminal and/or for using services which can be called up via a mobile radio network, the user interface being in the manner of a graphical usage surface visualizing a network-provider-specific graphical designed menu structure, wherein the mobile radio terminal is operated by means of an operating system and the menu structure allows a user access to the complete terminal functionality, services provided by a network-provider, as well as data and applications, wherein the user interface can be implemented independent of the mobile radio terminal operating system and data, which are required for the user interface to display the graphical usage surface as well as for the set up and visualization of the menu structure, are supplied from a memory unit which is independent from the mobile radio terminal, wherein the graphical usage surface can be displayed and can be controlled in a browser on a display of the terminal and menus with functions of the terminal and the services of a provider can be selected via the browser, wherein
- the memory unit is an identification module that can be connected to the mobile radio terminal, or
- the memory unit is a computer, on which the user interface is implemented, and in that a link for setting up a data link to the computer is stored on an identification module and the data which are required for the user interface can be downloaded from the computer to the identification module or into a memory of the terminal.

2. The mobile radio terminal as claimed in claim 1, **characterized in that** at least a part of the identification module of the mobile radio terminal is configured as an http server which provides the data required for display of the usage surface of the user interface.

3. The mobile radio terminal as claimed in one of the preceding claims, **characterized in that** the user interface is programmed using HTML, WML or XML

4. The mobile radio terminal as claimed in one of the preceding claims, **characterized in that** network-provider-specific data and/or applications which are stored on the memory unit and/or in the mobile radio terminal, and which can be selected and/or displayed and/or executed and/or controlled via the menu structure, are associated with the user interface.

5. The mobile radio terminal as claimed in one of the preceding claims, **characterized in that** parts of the menu structure of the user interface, in particular individual submenus, and/or parts of the data for setting up the menu structure are located on the terminal and/or on the computer of the network provider or of a third party.

6. The mobile radio terminal as claimed in one of the preceding claims, **characterized in that** the user interface has at least one application, by means of which an online data link can be set up to a server.

7. The mobile radio terminal as claimed in one of the preceding claims, **characterized in that** the identification module is a SIM card or a USIM card.

## Revendications

1. Terminal de téléphonie mobile comportant une interface utilisateur pour la manipulation du terminal de téléphonie mobile et/ou pour l'utilisation de services accessibles par l'intermédiaire d'un réseau mobile, dans lequel l'interface utilisateur est réalisée sous la forme d'une interface utilisateur graphique qui visualise une structure de menu représentée graphiquement de façon spécifique au fournisseur de réseau, dans lequel le terminal de téléphonie mobile est mis en fonctionnement au moyen d'un système d'exploitation et la structure de menu permet à un utilisateur d'accéder à la totalité des fonctionnalités du terminal, à des services délivrés par un fournisseur de réseau, ainsi qu'à d'autres données et applications, dans lequel l'interface utilisateur peut être mise en oeuvre indépendamment du système d'exploitation du terminal de téléphonie mobile, et les données nécessaires pour représenter l'interface utilisateur graphique et pour réaliser et visualiser la structure de menu sur l'interface utilisateur graphique peuvent être délivrées par une unité à mémoire indépendante du terminal de téléphonie mobile, dans lequel l'interface utilisateur graphique peut être affichée et manipulée dans un navigateur sur un afficheur du terminal et des menus comportant des fonctions du terminal et les services d'un fournisseur de services peuvent être sélectionnés par l'intermédiaire du navigateur, dans lequel
- l'unité à mémoire est un module d'identification pouvant être connecté au terminal de téléphonie mobile, ou
- l'unité à mémoire est un ordinateur sur lequel l'interface utilisateur est mise en oeuvre et une combinaison destinée à établir une connexion de données à l'ordinateur est stockée sur un module d'identification et les données nécessaires à l'interface utilisateur peuvent être téléchargées par l'ordinateur sur le module d'identification ou dans une mémoire du terminal.

2. Terminal de téléphonie mobile selon la revendication 1, **caractérisé en ce qu'**au moins une partie du module d'identification du terminal de téléphonie mobile est conçue sous la forme d'un serveur http qui délivre les données nécessaires à l'interface utilisateur pour la représentation de l'interface utilisateur.

3. Terminal de téléphonie mobile selon l'une quelconque des revendications précédentes, **caractérisé en ce que** l'interface utilisateur est programmée en HTML ou WML ou XML.

4. Terminal de téléphonie mobile selon l'une quelconque des revendications précédentes, **caractérisé en ce que** des données et/ou des applications spécifiques au fournisseur de réseau et stockées sur l'unité à mémoire et/ou dans le terminal de téléphonie mobile, qui peuvent être sélectionnées et/ou affichées et/ou exécutées et/ou mises en oeuvre par l'intermédiaire de la structure de menu, sont associées à l'interface utilisateur,.

5. Terminal de téléphonie mobile selon l'une quelconque des revendications précédentes, **caractérisé en ce que** des parties de la structure de menu de l'interface utilisateur, notamment des sous-menus individuels et/ou des parties des données servant à la réalisation de la structure de menu se trouvent sur le terminal et/ou sur un ordinateur du fournisseur de réseau ou d'un tiers.

6. Terminal de téléphonie mobile selon l'une quelconque des revendications précédentes, **caractérisé en ce que** l'interface utilisateur comprend au moins une application au moyen de laquelle une connexion de données en ligne peut être établie avec un serveur.

7. Terminal de téléphonie mobile selon l'une quelconque des revendications précédentes, **caractérisé en ce que** le module d'identification est une carte SIM ou une carte USIM.
